Europäisches Patentamt

European Patent Office

Office européen des brevets

(19)

(11) Veröffentlichungsnummer: **0 397 903**
**A1**

## (12) EUROPÄISCHE PATENTANMELDUNG

(21) Anmeldenummer: **89108982.3**

(22) Anmeldetag: **18.05.89**

(51) Int. Cl.⁵: **G11B 5/48**

(43) Veröffentlichungstag der Anmeldung:
**22.11.90 Patentblatt 90/47**

(84) Benannte Vertragsstaaten:
**AT CH DE FR GB IT LI NL**

(71) Anmelder: **Siemens Aktiengesellschaft**
**Wittelsbacherplatz 2**
**D-8000 München 2(DE)**

(72) Erfinder: **Rotheimer, Otto**
**Kurzbauerstrasse 4**
**D-8000 München 71(DE)**

(54) **Drehpositionierer für einen Magnetplattenspeicher.**

(57) Drehpositionierer für einen Magnetplattenspeicher mit einem Schwenkstück, das auf einer Achse (1) drehbeweglich gelagert ist und eine Mehrzahl von in seiner Achsenrichtung in regelmäßigen Abständen (a) angeordneten Tragarmen (5) für zu befestigende Magnetkopfsysteme (7) sowie Haltearme (3) für eine Antriebsspule aufweist. Dabei ist das Schwenkstück aus einem hohlzylinderförmigen Lagerkörper (2) und daran einzeln angesetzten Tragarmen (5) aufgebaut. Die Tragarme sind durch eine in einem Elektronenstrahlschweißverfahren hergestellte Verbindung auf einer Paßfläche (11) des Lagerkörpers (2) festgelegt.

FIG 2      FIG 3

EP 0 397 903 A1

## Drehpositionierer für einen Magnetplattenspeicher

Die Erfindung bezieht sich auf einen Drehpositionierer für einen Magnetplattenspeicher gemäß dem Oberbegriff des Patentanspruches 1.

Die Zuverlässigkeit einer Positionierung sowie die Zugriffszeit bei Magnetplattenspeichern ist, abgesehen von dem verwendeten Positionierverfahren, in weitem Umfang auch durch den konstruktiven Aufbau der Positioniereinheit bestimmt. Bei modernen Festplattenspeichern mit Plattendurchmessern von 5 1/4" oder 3 1/2" haben sich vor allem Drehpositionierer durchgesetzt. Sie nehmen im Vergleich zu Linearpositionierern weniger Raum ein und sind dadurch weniger empfindlich in bezug auf mechanische Schwingungen, die die von der Positioniereinheit getragenen Magnetkopfsysteme aus der idealen Spurposition wegbewegen.

Wegen der oszillierenden Schwingbewegungen, die der Drehpositionierer bei den Positioniervorgängen ausführt, ist sein konstruktiver Aufbau im wesentlichen so ausgelegt, daß er bei möglichst kleinem Massenträgheitsmoment dennoch möglichst steif ausgebildet ist. Damit soll erreicht werden, daß Eigenresonanzen erst in einem Bereich von mehreren kHz auftreten, wie beispielsweise in Magnetic Recording, Vol. II, herausgegeben von C. D. Mee und E. D. Daniel im McGraw Hill Verlag, 1988 im Kapitel 2.2.4, insbesondere im Abschnitt 2.2.4.6 ausgeführt ist.

Frühere Überlegungen, dieses Ziel zu erreichen, haben bei Mehrplattenspeichern zu einem Aufbau des Drehpositionierers geführt, wie er beispielsweise in Transactions of the ASME, Design Engineering Technical Conference, Ohio, Oct. 1986, Conference - Paper 86-DET-135, Seiten 1 bis 6 beschrieben ist. Charakteristisch für diesen bekannten Aufbau eines Drehpositionie rers sind mehrere, individuelle Tragarme, die gegebenenfalls unter Zwischenlage von Distanzscheiben, zu einem Paket gestapelt auf einer Achse des Drehpositionierers drehbeweglich gelagert sind. Bei einer Mehrzahl von aufeinandergeschichteten Teilen sind Toleranzkettungen unvermeidbar, auch können Radialverschiebungen innerhalb Des Paketes, beispielsweise aufgrund von Wärmedehnungen nicht ausgeschlossen werden. Dieses bekannte Aufbauprinzip ist daher für moderne Magnetplattenspeicher vor allem deshalb nicht besonders vorteilhaft, weil heute alle Möglichkeiten zur weiteren Kapazitätserhöhung ausgenutzt werden und daher insbesondere auch Lageverschiebungen der Magnetkopfsysteme zueinander sehr leicht zu Fehlern im laufenden Betrieb führen.

Aus US-A-4,689,703 ist ein anderes Aufbauprinzip für Drehpositionierer bekannt, dessen Charakteristikum ein einteiliger, auf einer feststehenden Achse drehbeweglich gelagerter Schwenkkörper mit integrierten Tragarmen ist. D. h., die Tragarme sind zusammen mit dem den Lagerkörper bildenden Schwenkstück als eine einteilige Einheit ausgeführt. Zur Erhöhung der Steifigkeit weisen alle Tragarme eine gemeinsame Rückwand auf. Probleme bei dieser Struktur eines Drehpositionierers bestehen vor allem im Herstellungsaufwand und gegebenenfalls in der Einhaltung der geforderten Toleranzen. Stellt man nämlich den Schwenkkörper als Feingußteil her, dann ist dieses teuer und darüber hinaus ist dennoch eine Nachbearbeitung unvermeidbar. Außerdem ist die Temperaturbeständigkeit wegen des Kristallaufbaus im Gußteil nicht sichergestellt.

Nun kann man einen solchen Schwenkkörper auch aus einem Strangpreßprofil fertigen und die Tragarme aus einem Grundkörper ausfräsen. Auch diese Lösung ist fertigungstechnisch aufwendig und nicht unproblematisch. Betrachtet man die Stärke eines Tragarmes im Vergleich zu seiner Länge - das Maßverhältnis liegt im Bereich von 1:25 und darüber - dann ist unmittelbar einzusehen, daß bei dem Fräsvorgang erhebliche Probleme auftreten, da bleibende unerwünschte Formänderungen der Tragarme unbedingt zu vermeiden sind. Auch hier also treten bei hohen Herstellungskosten zusätzlich noch Toleranzprobleme auf.

Der Erfindung liegt daher die Aufgabe zugrunde, einen Drehpositionierer der eingangs genannten Art zu schaffen, dessen Aufbau den geforderten mechanischen Bedingungen hinsichtlich Massearmut und Steifigkeit bei Einhaltung der vorgegebenen Toleranzen genügt und der dennoch einfach und auch kostengünstig herstellbar ist.

Bei einem Drehpositionierer der eingangs genannten Art wird diese Aufgabe durch die im Kennzeichen des Hauptanspruches beschriebenen Merkmale gelöst.

Die Erfindung geht - in Abkehr von bekannten Aufbauprinzipien für Drehpositionierer - von der Überlegung aus, das Schwenkstück in Einzelelemente, d. h. einen einteiligen Lagerkörper und individuelle Tragarme aufzulösen. Dieses Aufbauprinzip müßte ohne aufwendige Nacharbeiten selbst bei den vorgegebenen Toleranzen eine planparallele Ausrichtung der Tragarme des Schwenkstückes ermöglichen, sofern eine an die Randbedingungen angepaßte, zuverlässige Verbindungstechnik zur Verfügung steht.

Eine Vielzahl von bekannten Verbindungstechniken, wie z. B. Schrumpf- oder Klebeverbindungen, aber auch Gas- oder Elektroschweißen scheidet aber für diesen Anwendungsfall aus. Drehpositionierer sind bekanntlich, wegen der angestrebten kurzen Positionierzeiten und der bei Positioniervorgängen auftretenden oszillierenden Bewegung, hohen Wechselbelastungen ausgesetzt, die insbesondere eine solche Verbindungsstelle auf Dauer stark beanspruchen. Um dies zahlenmäßig zu verdeutlichen, sei hier nur angeführt, daß bei der konstruktiven Auslegung von modernen Drehpositionierern Belastungen von mehr als dem 100-fachen der Erdbeschleunigung zugrundegelegt werden. Dazu kommt, daß eine thermische Stabilität der Verbindung mindestens in einem Bereich von -40° bis +70° C gefordert wird. Konventionelle Schrumpf- oder Klebeverbindungen sind daher nicht zuverlässig genug.

Die Mehrzahl der konventionellen Schweißverfahren ist als Verbindungstechnik ebenso nicht anwendbar. Zum einen sind die aus Leichtmetallegierungen hergestellten Einzelelemente nur unter erschwerten Bedingungen schweißbar. Entscheidend aber ist, daß die Wärmeaufnahme bei den allgemein üblichen Schweißverfahren, sogar noch beim Schutzgasschweißen immer noch viel zu hoch ist, um in diesem Anwendungsfall insbesondere auch wegen der auftretenden Werkstoffschrumpfungen zu befriedigenden Ergebnissen zu führen.

Die Lösung dieses Problemes bietet das an sich bekannte und in wachsendem Umfang genutzte Elektronenstrahl-Schweißverfahren. Die bei diesem Verfahren lokal an der Schweißstelle eingebrachte, in Wärme umgesetzte Energie ist in diesem Fall etwa noch um eine Größenordnung geringer als beim Schutzgasschweißen. Gerade dieses Schweißverfahren ergibt sehr tiefe, enge Schweißkanäle, die zu stabilen Verbindungen führen. Wegen der Kombination dieser Eigenschaften erweist sich das Elektronenstrahlschweißen in diesem Anwendungsfall als eine vorteilhafte Verbindungstechnik für das Festlegen individueller Tragarme auf dem Lagerkörper, weil damit eine dauerbelastbare Verbindung erzielt wird, ohne daß beim Herstellungsvorgang unzulässige Schrumpfspannungen auftreten, die zu Formveränderungen der verbundenen Elemente Anlaß geben.

Wie eine vorteilhafte Weiterbildung der Erfindung zeigt, ist diese Schweißverbindung so belastungsfähig und sicher genug, daß sogar punktförmige Verbindungen eingesetzt werden können, d. h. daß die Tragarme mit ihren beiden Seitenkanten lediglich punktförmig an den Lagerkörper angeschweißt sind. Diese Möglichkeit verringert zusätzlich die insgesamt für die Schweißverbindungen aufzubringende Energie, so daß damit auch die von dem Schwenkstück insgesamt aufzunehmende Wärmemenge weiter herabgesetzt wird. Weiterhin ist dieses Schweißverfahren in dem vorliegenden Anwendungsfall auch besonders geeignet, einen automatisierten Fertigungsablauf zu ermöglichen, insbesondere auch deswegen, weil die Gesamtabmessungen des montierten Schwenkstückes relativ klein sind. Bei einem Drehpositionierer für einen 5 1/4"-Magnetplattenspeicher liegt beispielsweise die axiale Länge unter 5 cm bei einem Gesamtmaß in radialer Richtung von etwa 8 cm. Teile dieser Größenordnung lassen sich mit handelsüblichen Elektronenstrahl-Schweißanlagen, wie sie beispielsweise in M & B Monographs "Electron Beam Welding" von M. J. Fletcher, erschienen bei Mills & Boon Ltd., London 1971 beschrieben sind, ohne weiteres bearbeiten.

Im folgenden wird ein Ausführungsbeispiel der Erfindung anhand der Zeichnung im einzelnen erläutert. Dabei zeigt:

FIG 1 eine Frontansicht eines komplett montierten Drehpositionierers,

FIG 2 und FIG 3 jeweils eine Front- bzw. Seitenansicht allein des Schwenkstückes dieses Drehpositionierers und

FIG 4 und FIG 5 einen Querschnitt durch einen Lagerkörper des Schwenkstückes und eine Frontansicht eines Tragarmes als Einzelelemente des Schwenkstückes.

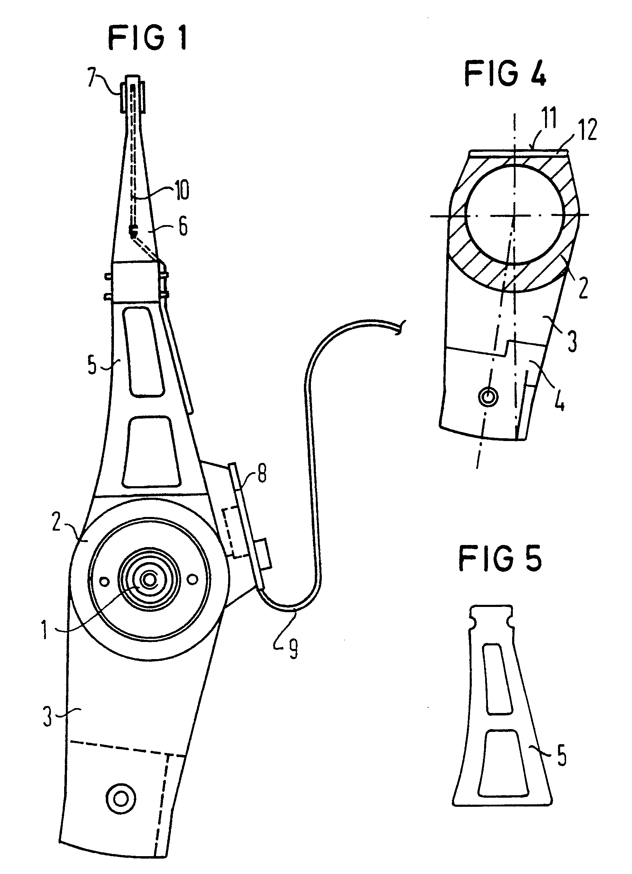

In FIG 1 ist die Frontansicht eines Drehpositionierers für einen Magnetplattenspeicher gezeigt. Auf einer Achse 1 ist ein Schwenkstück verschwenkbar gelagert, das aus einem konzentrisch zur Achse 1 angeordneten, als Hohlzylinder ausgebildeten Lagerkörper 2 und von diesem radial abstehenden Tragarmen 5 besteht. Nach unten gerichtet, den Tragarmen 5 gegenüberliegend, stehen von diesem Lagerkörper 2 weiterhin Haltearme 3 als Aufnahmen für eine Magnetantriebsspule, im einzelnen nicht dargestellt, ab. Die Tragarme 5 tragen an ihren äußeren Enden flexible Kopfplatten 6, an denen wiederum Magnetkopfsysteme 7 festgelegt sind. An dem Lagerkörper 2 des Schwenkstückes ist seitlich eine Leiterplattenbaugruppe 8 befestigt, die, wie schematisch angedeutet, über eine flexible Mehrfachleitung 9 mit der übrigen, hier nicht dargestellten Elektronik des Magnetplattenspeichers verbunden ist. Die Leiterplattenbaugruppe enthält beispielswei se eine Verstärkerelektronik, die über Einzelleitungen 10 unmittelbar an die Magnetkopfsysteme 7 angeschlossen ist.

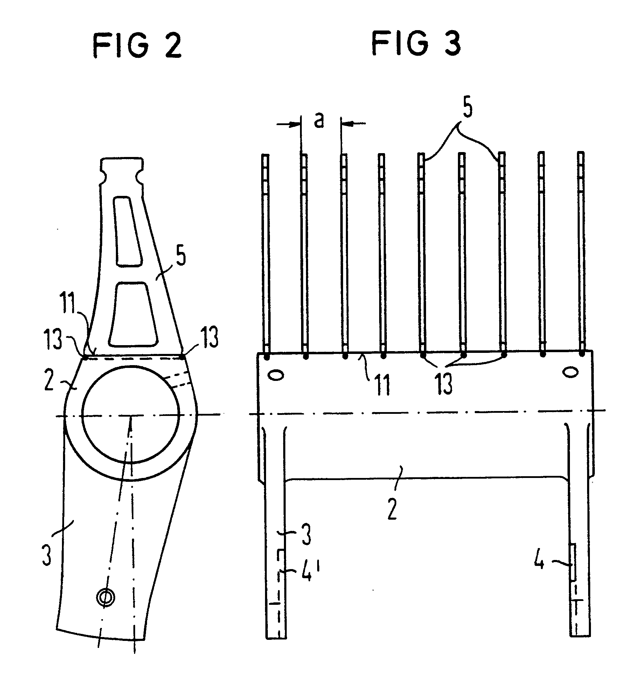

Für den vorliegenden Fall kommt es an sich lediglich auf den Aufbau des Schwenkstückes an, dieser ist daher als Einzelteil in FIG 2 in einer Front- und in FIG 3 einer Seitenansicht nochmals dargestellt. Nach der Beschreibung zu FIG 1 bedarf es zur Frontansicht im wesentlichen keiner weiteren Erläuterung, die Seitenansicht von FIG 3 illustriert darüber hinaus die Anordnung der Tragarme 5 auf dem Lagerkörper 2. Die Tragarme 5 sind senkrecht zu seiner Längsachse ausgerichtet, ihre Anzahl ebenso wie ihr gegenseitiger Abstand ist durch den Aufbau eines nicht dargestellten Magnetplattenstapels des Magnetplattenspeichers vorgegeben. Sind beispielsweise bei einem Magnetplattenspeicher acht Magnetspeicherplatten übereinander gestapelt, dann weist der Drehpositionierer, wie hier dargestellt, neun Tragarme auf, um mit jeweils einem Magnetkopf alle Oberflächen der Magnetspeicherplatten gleichzeitig abtasten zu können. Wegen dieser räumlichen Zuordnung entspricht der gegenseitige Abstand a der Tragarme 5 dem Mittenabstand der Magnetspeicherplatten des Plattenstapels. Zur Klarstellung der Größenverhältnisse sei hier nur angedeutet, daß FIG 2 und 3 das Schwenkstück in vergrößertem Maßstab, etwa im Verhältnis 2:1 zeigen. Der Teilungsabstand a der Tragarme 5 beträgt beispielsweise weniger als 8 mmm. Die Höhe der Toleranzanforderungen offenbart beispielsweise die Tatsache, daß Abweichungen von der Planparallelität der Tragarme 5 lediglich in einem Bereich von nur wenigen Hundertstel mm zulässig sind.

In FIG 4 bzw. 5 sind nochmals die beiden Einzelteile des Schwenkstückes in jeweils einer Ansicht gezeigt. Der in FIG 4 dargestellte Schnitt durch den Lagerkörper 2 stellt seinen Aufbau als Hohlzylinder klar heraus. Die hier sichtbare Innenfläche der nach unten weisenden Haltearme 3 läßt die daraus ausgefrästen Anlageflächen 4 bzw. 4' für die nicht dargestellte Magnetantriebsspule erkennen. In einer zur Längsachse des Lagerkörpers 2 parallelen Ebene ist der Hohlzylinder angefast und bildet damit eine Paßfläche 11 zum Ansetzen der Tragarme 5. Wie in dem in FIG 4 dargestellten Beispiel angedeutet, können in diese Paßfläche 11 darüber hinaus quer zur Längsachse des Lagerkörpers 2 verlaufende Nuten 12 als Ansatzflächen für jeweils einen der Tragarme 5 eingelassen sein. FIG 5 zeigt schließlich nochmals die Frontansicht für einen Tragarm 5, der vorzugsweise als flaches Stanzteil aus einem Blech einer Leichtmetallegierung hergestellt ist.

Diese beiden Elemente werden nun, wie in den FIG 2 bzw. 3 dargestellt, miteinander durch schematisch angedeutete Schweißpunkte 13 verbunden, die an den unteren Ecken der Seitenkanten der Tragarme 5 angesetzt sind. Die Schweißverbindung wird durch Elektronenstrahlschweißen hergestellt. Dafür können handelsübliche Elektronenstrahl-Schweißanlagen eingesetzt werden, wobei insbesondere die geringen Außenabmessungen des Schwenkstückes von Vorteil sind. Dies bedeutet, daß der Schweißvorgang in einfacher Weise automatisiert werden kann. Vorzugsweise werden dabei hier nicht dargestellte Montageformen verwendet, in die die noch nicht zusammengefügten Einzelteile, d. h. der Lagerkörper 2 und die Tragarme 5 paßgenau und zueinander ausgerichtet eingelegt werden. In dieser Montagevorrichtung werden die einzelnen Tragarme 5 nacheinander zunächst einseitig an der Paßfläche 11 des Lagerkörpers 2 festgelegt. Nach Umdrehen des Werkstückes werden in derselben Weise dann die übrigen Schweißpunkte 13 auf der gegenüberliegenden Seite der Tragarme 5 hergestellt.

In diesem Anwendungsfall wird insbesondere das beim Elektronenstrahlschweißen von anderen Schweißverfahren völlig abweichende Aufschmelzverhalten an der Schweißstelle ausgenutzt. Nach einer heute wohl gesicherten Lehrmeinung ruft der Elektronenbeschuß eine starke Erhitzung der Schweißstelle hervor, wobei insbesondere die starke Fokussierung des Elektronenstrahles auf eine lokale Schweißstelle bis zu $10^{-6}$ mm$^2$ im Querschnitt ausgenutzt wird. Daraus resultiert ein sehr hoher Dampfdruck des aufgeschmolzenen Materials, der es seinerseits den Elektronen erlaubt, tiefer in die Werkstückoberfläche eindringen zu können, bevor sie ihre Energie abgeben. Auf diese Weise entsteht eine Schmelzzone, die im Querschnitt keilförmig ausgebildet ist, wobei ein Verhältnis der Tiefe zur mittleren Breite dieses Keiles etwa bis zu 25:1 erreicht wird.

Gerade diese Eigenschaft des Elektronenstrahlschweißens ist hier mit von ausschlaggebender Bedeutung, denn auf diese Weise lassen sich bei einer hohen Energiedichte tief wurzelnde Schweißpunkte erzeugen, die eine sichere Verbindung der Haltearme 5 mit dem Lagerkörper 2 gewährleisten. Von der lokalen Schweißstelle fließt dabei die in Wärme umgesetzte Energie radial nach allen Seiten gleichmäßig ab, wobei die beim Schweißvorgang insgesamt in das Schwenkstück eingebrachte Energiemenge wesentlich geringer ist als die an sich bei anderen konventionellen Schweißverfahren benötigte Energiemenge ist. Dies gilt um so mehr, als eine rein punktförmige Verbindung der Tragarme 5 mit dem Lagerkörper 2 auch bei den vorgegebenen Wechselbelastungen im Betriebsfall noch völlig ausreicht und somit lange Schweißnähte vermieden werden können.

Im beschriebenen Ausführungsbeispiel wurde davon ausgegangen, daß die Tragarme 5 vor dem Schweißvorgang in Nuten 12 eingelegt werden, die in die Paßfläche 11 eingelassen sind. Wenn man - wie angedeutet - aus Gründen der Automatisierung des Schweißvorganges Montagevorrichtungen verwendet, die die Tragarme 5 bezüglich der Paßfläche 11 des Lagerkörpers 2 ausrichten, dann wäre es bei genügend paßgenauen Montagevorrichtungen auch möglich, auf diese Nuten 12 zu verzichten und die Tragarme 5 plan auf die Paßfläche 11 des Lagerkörpers aufzusetzen.

## Ansprüche

1. Drehpositionierer für einen Magnetplattenspeicher mit einem Schwenkstück, das auf einer Achse (1) drehbeweglich gelagert ist und eine Mehrzahl von in seiner Achsenrichtung in regelmäßigen Abständen (a) angeordneten Tragarmen (5) für zu befestigende Magnetkopfsysteme (7) sowie Haltearme (3) für eine Antriebsspule aufweist, wobei die Tragarme und die Haltearme an einander gegenüberliegenden Seiten radial von dem Schwenkstück abstehen, **dadurch gekennzeichnet,** daß das Schwenkstück aus einem hohlzylinderförmigen Lagerkörper (2) und daran einzeln angesetzten Tragarmen (5) aufgebaut ist und daß die Tragarme durch eine in einem Elektronenstrahlschweißverfahren hergestellte Verbindung auf einer Paßfläche (11) des Lagerkörpers (2) festgelegt sind.

2. Drehpositionierer nach Anspruch 1, **dadurch gekennzeichnet,** daß quer zur Längsachse des Lagerkörpers (2) in seine Paßfläche (11) eine Mehrzahl von Nuten (12) als Aufnahmen für jeweils einen der Tragarme (5) eingelassen ist.

3. Drehpositionierer nach einem der Ansprüche 1 oder 2, **dadurch gekennzeichnet,** daß die Tragarme (5) mit ihren beiden Seitenkanten punktförmig (z. B. in 13) an den Lagerkörper (2) angeschweißt sind.

4. Drehpositionierer nach einem der Ansprüche 1 bis 3, **dadurch gekennzeichnet,** daß der Lagerkörper (2) als Druckgußteil und die Tragarme (5) als Stanzteile hergestellt sind.

5. Drehpositionierer nach einem der Ansprüche 1 bis 4, **dadurch gekennzeichnet,** daß der Lagerkörper (2) und die Tragarme (5) aus Leichtmetallegierungen mit mindestens ähnlichen Ausdehnungskoeffizienten hergestellt sind.

FIG 1

FIG 4

FIG 5

# FIG 2

# FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | JP-A-64057468 (NEC) <br> * das ganze Dokument * | 1 | G11B5/48 |
| A | --- | 2 | |
| Y | PATENT ABSTRACTS OF JAPAN <br> vol. 10, no. 312 (P-509)(2368) 23 Oktober 1986, <br> & JP-A-61 122917 (MATSUSHITA ELECTRIC) 10 Juni 1986, <br> * das ganze Dokument * | 1 | |
| A | PATENT ABSTRACTS OF JAPAN <br> vol. 8, no. 196 (P-299)(1633) 8 September 1984, <br> & JP-A-59 82666 (TOSHIBA K.K.) 12 Mai 1984, <br> * das ganze Dokument * | 1-2, 5 | |
| A | JP-A-637572 (MITSUBISHI ELECTRIC) <br> * das ganze Dokument * | 1, 4 | |
| A | PATENT ABSTRACTS OF JAPAN <br> vol. 12, no. 90 (P-679)(2937) 24 März 1988, <br> & JP-A-62 223867 (TOSHIBA) 1 Oktober 1987, <br> * das ganze Dokument * | 1, 3 | |
| A | PATENT ABSTRACTS OF JAPAN <br> vol. 9, no. 304 (P-409)(2027) 30 November 1985, <br> & JP-A-60 136066 (HITACHI SEISAKUSHO K.K.) 19 Juli 1985, <br> * das ganze Dokument * | 1 | G11B |
| A | PATENT ABSTRACTS OF JAPAN <br> vol. 9, no. 72 (P-345)(1795) 2 April 1985, <br> & JP-A-59 203271 (HITACHI) 17 November 1984, <br> * das ganze Dokument * | 1 | |
| A | PATENT ABSTRACTS OF JAPAN <br> vol. 6, no. 203 (P-148)(1081) 14 Oktober 1982, <br> & JP-A-57 109124 (FUJITSU K.K.) 7 Juli 1982, <br> * das ganze Dokument * | 1, 3 | |

RECHERCHIERTE SACHGEBIETE (Int. Cl.5 )

Der vorliegende Recherchenbericht wurde für alle Patentansprüche erstellt

| Recherchenort | Abschlußdatum der Recherche | Prüfer |
|---|---|---|
| DEN HAAG | 06 NOVEMBER 1989 | CALARASANU |